# EUROPÄISCHE PATENTSCHRIFT

(11) **EP 1 783 795 B1**
(45) Veröffentlichungstag und Bekanntmachung des Hinweises auf die Patenterteilung: **07.05.2008**
(21) Anmeldenummer: 05024155.3
(22) Anmeldetag: 05.11.2005
(51) Int. Cl.: H01H 25/06, B60Q 1/14, H01H 25/00

(54) **Elektrische Schalteinrichtung**
Electrical switching device
Dispositif de commutation électrique

(43) Veröffentlichungstag der Anmeldung: 09.05.2007
(73) Patentinhaber: Delphi Technologies Inc., Troy, MI 48007 (US)
(72) Erfinder: Rudolph, Gerd, 55459 Aspisheim (DE); Dietrich, Andreas, 55452 Guldental (DE); Grundmeier, Jürgen, 55595 Argenschwang (DE)
(74) Vertreter: Becker, Bernd

(56) Entgegenhaltungen:
- EP-A- 0 914 991
- EP-A- 0 919 436
- EP-A- 1 052 147
- EP-A- 1 207 076
- EP-A- 1 323 580
- DE-A1- 10 238 269
- US-A1- 2002 023 826

## Beschreibung

Die Erfindung bezieht sich auf eine elektrische Schalteinrichtung, insbesondere Lenkstockschalter für ein Kraftfahrzeug, mit einer an dem freien Ende eines Schalthebels angeordneten Dreh-Schub-Schaltergruppe, die zumindest einen Drehschalter und einen gegenüber dem Schalthebel verschiebbaren Schubschalter umfasst, wobei der Drehschalter und der Schubschalter jeweils Kontakte aufweisen, denen mit einer flexiblen Leiterplatte verbundene Gegenkontakte eines Kontaktträgers zugeordnet sind.

Die DE 38 02 144 C1 offenbart einen elektrischen Dreh-Schubschalter mit einem die elektrischen Kontaktteile aufnehmenden Gehäuse, an dem ein um die Gehäuselängsachse drehbar und parallel zur Gehäuselängsachse gegen Federkraft verschiebbar in mehrere Schaltpositionen bringbares Betätigungsglied gelagert ist. Das Betätigungsglied steht mit mechanischen Funktionselementen in Verbindung, die derart ausgebildet und funktional den bewegbaren elektrischen Kontaktteilen zugeordnet sind, dass die zur Verstellung vorgenommenen Dreh- und Schubbewegungen des Betätigungsgliedes jeweils lediglich in translatorische Schiebebewegungen für die bewegbaren elektrischen Kontaktteile umgeformt werden. Zur Realisierung der verschiedenen Schaltfunktionen sind die bewegbaren elektrischen Kontaktteile zwischen zwei Leiterplatten angeordnet, die die im Gehäuse ortsfest gehaltenen elektrischen Kontaktteile umfassen.

Im Weiteren zeigt die EP 1 398 212 A2 eine elektrische Schalteinrichtung mit einer an dem freien Ende eines Schalthebels angeordneten Dreh-Schub-Schaltergruppe, die zumindest einen Drehschalter und einen durch eine Schubbewegung gegenüber dem Schalthebel betätigbaren Schubschalter umfasst. Der Drehschalter und der Schubschalter weisen jeweils durch ein Betätigungselement beaufschlagbare bewegliche Kontakte auf, die sich auf einer ortsfesten, von einem Tragkörper gehaltenen Leiterbahnstruktur mit dementsprechend ortsfesten elektrischen Kontaktflächen abstützen. Die Ebene der ortsfest angeordneten Kontaktelemente des zumindest einen Drehschalters ist in Querrichtung zur Längserstreckung der Dreh-Schub-Schaltergruppe verlaufend angeordnet und dem Drehschalter ist ein drehmomentschlüssig, jedoch schubentkoppelt an eine Bewegung seines Betätigungselementes gekoppelter Schleifkörper mit den beweglichen Kontaktelementen zugeordnet.

Es ist Aufgabe der Erfindung, eine Schalteinrichtung der eingangs genannten Art zu schaffen, die bei einem kompakten Aufbau kostengünstig zu fertigen ist.

Erfindungsgemäß wird die Aufgabe dadurch gelöst, dass der Kontaktträger als Schiebeschaltglied ausgebildet ist und stirnseitig die mit beweglichen Kontakten des Drehschalters zusammenwirkenden Gegenkontakte sowie umfangsseitig die von Festkontakten des Schubschalters beaufschlagten Gegenkontakte aufweist.

Demnach weist die Schalteinrichtung bei einer verhältnismäßig hohen Funktionsdichte einen kompakten Aufbau auf. Sowohl der Drehschalter als auch der Schubschalter wirken mit dem gemeinsamen Kontaktträger zusammen, der aufgrund der Flexibilität der Leiterplatte innerhalb der Schalteinrichtung verschiebbar gelagert ist. Damit der Kontaktträger keine Drehbewegungen ausführt, ist selbstverständlich eine entsprechende Führung vorgesehen, wonach die Ausführung der Drehschaltfunktionen gewährleistet ist.

Um sowohl in der beaufschlagten als auch in der unbeaufschlagten Schaltstellung des Schubschalters ein Öffnen und Schließen von Strompfaden des Drehschalters zu bewerkstelligen, sind zweckmäßigerweise die in dem Kontaktträger aufgenommenen Gegenkontakte als Kontaktfelder und die Kontakte als Kontaktfedern ausgeführt.

In Ausgestaltung ist der Kontaktträger ringförmig gestaltet und auf einem verschiebbaren Schaltstück gelagert, das einem die Festkontakte des Schubschalters aufweisenden Schalterträger zugeordnet ist. Vorzugsweise ist der Schalterträger auf einem kreuzweise beaufschlagbaren Fußstück gehalten. Sonach bildet der Schalterträger mit dem Fußstück den eigentlichen Schalthebel, während die Dreh-Schub-Schaltergruppe als Griffstück dient. Dem kreuzweise beaufschlagbaren Fußstück können ohne weiteres ebenfalls Schaltfunktionen zugeordnet sein, wie es aus dem Stand der Technik vielfach bekannt ist.

Nach einer Weiterbildung erstreckt sich die Leiterplatte durch das Innere des hohlen Fußstückes sowie einen auf dem Fußstück angeordneten Abschnitt des Schalterträgers, der eine Öffnung zum Durchtritt der Leiterplatte aufweist, die zu einer Ausnehmung zum Durchfädeln der Leiterplatte in dem auf dem Schalterträger gehaltenen Schaltstück korrespondiert und in ihren weiteren Verlauf innerhalb von Gehäuseteilen zu dem Kontaktträger geführt ist. Aufgrund des Verlaufs der Leiterplatte wirkt diese sich nicht störend auf funktionale Bauteile der Schalteinrichtung aus. Selbstverständlich ist die Leiterplatte für eine Hin- und Herbewegung des Kontaktträgers bei der Betätigung des Schubschalters ausreichend lang bemessen, wobei die flexible Leiterplatte innerhalb der Schalteinrichtung in einer Schleife verlegt werden kann. Unter Gehäuseteilen sind sowohl Betätigungselemente als auch Zierringe und dergleichen zu verstehen, die im Wesentlichen das Griffstück der Schalteinrichtung bilden.

Vorteilhafterweise sind zwei durch einen Distanzring zueinander beabstandete Drehschalter vorgesehen, deren Kontakte auf gegenüberliegenden Stirnseiten des Kontaktträgers angeordnete Gegenkontakte beaufschlagen und die auf dem Schaltstück gelagert sind. Demnach sind die beiden Drehschalter unter einem geringen Platzbedarf angeordnet und sämtliche erforderlichen Strompfade, beispielsweise zu einem Bordnetz eines Kraftfahrzeuges, sind über die Leiterplatte zu dem Kontaktträger geführt.

Zur Realisierung eines verrastbaren Drehschalters mit einer kompakten Bauform ist vorzugsweise das Betätigungselement des ersten Drehschalters dem freien Ende der Schalteinrichtung zugeordnet und weist einen mit stirnseitigen Rasthülsen versehenen Halter für die Kontakte auf, wobei die federbelasteten Rasthülsen mit einer dem Schaltstück zugeordneten Rastkurve zusammenwirken.

Um den zweiten Drehschalter rastend und/oder getastet zu betätigen sowie Platz sparend anzuordnen, umfasst zweckmäßigerweise der zweite Drehschalter einen Betätigungsring mit den Kontakten sowie einer stirnseitigen Rastkurve, wobei die Rastkurve mit federbelasteten Rasthülsen des Kontaktträgers zusammenwirkt.

Damit ein taktil erfassbares Schaltgefühl bei der Beaufschlagung des Schubschalters erzeugt wird, umfasst bevorzugt der Schalterträger eine in radialer Richtung wirkende federbelastete Rasthülse zur Beaufschlagung einer dem Schaltstück zugeordneten Schaltkurve.

Die erfindungsgemäße Schalteinrichtung eignet sich insbesondere als Wischer-/Wascherschalter für ein Kraftfahrzeug.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand zweier Ausführungsbeispiele unter Bezugnahme auf die zugehörigen Zeichnungen näher erläutert. Es zeigt:

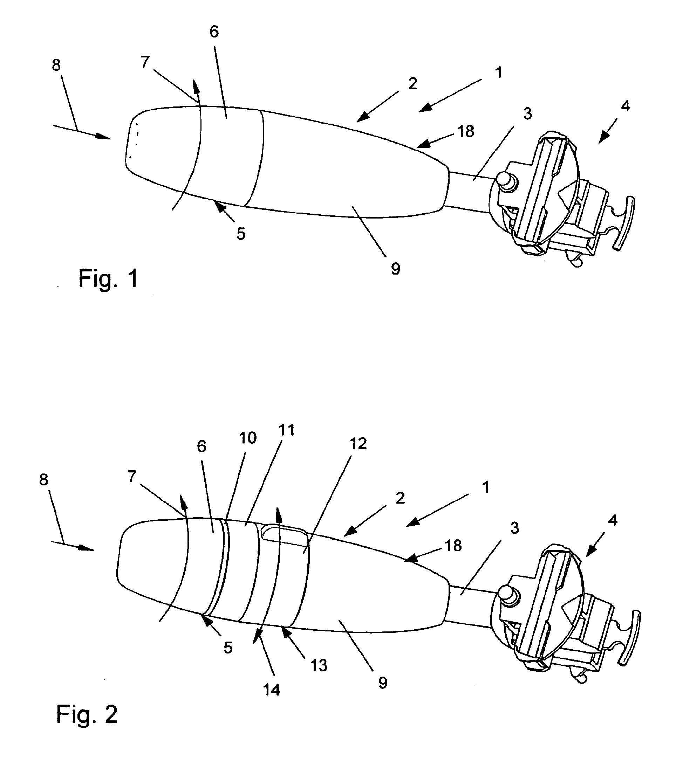

- Fig.1: eine perspektivische Darstellung einer erfindungsgemäßen elektrischen Schalteinrichtung,
- Fig.2: eine perspektivische Darstellung der Schalteinrichtung nach Fig. 1 in alternativer Ausgestaltung,

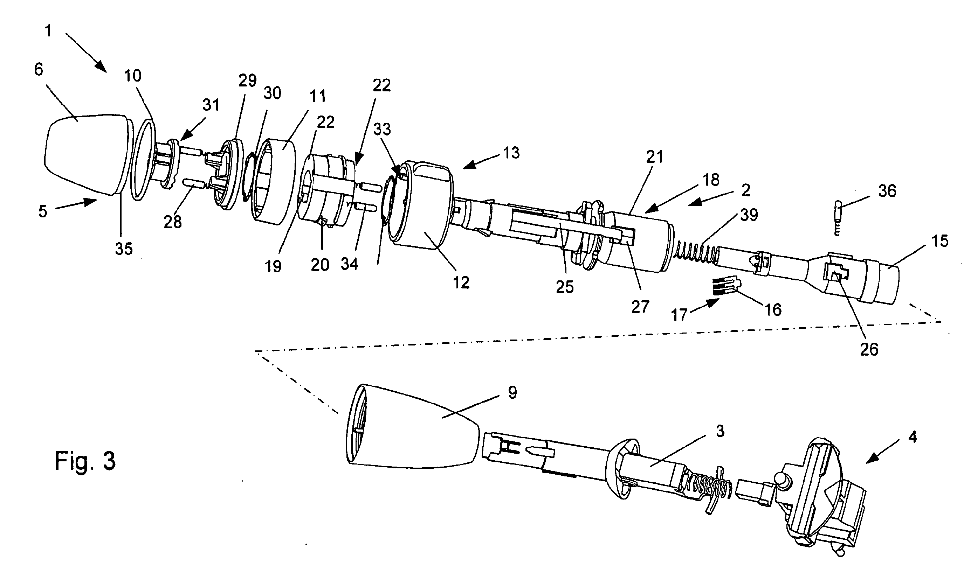

- Fig.3: eine Explosionsdarstellung der Schalteinrichtung nach Fig. 2,

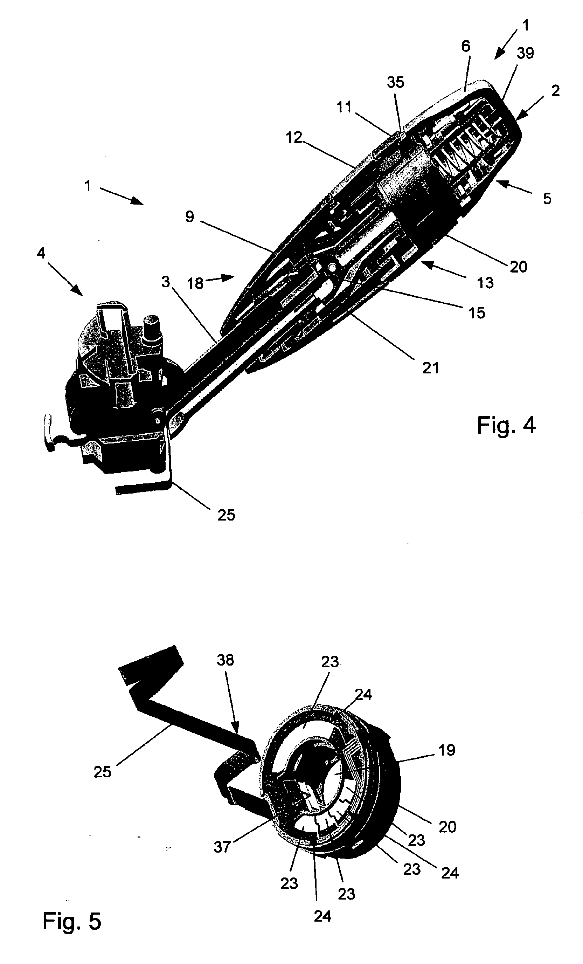

- Fig.4: eine Schnittdarstellung der Schalteinrichtung nach Fig. 2 und
- Fig.5: eine vergrößerte Darstellung einer Einzelheit der Schalteinrichtung nach Fig. 2.

Die Schalteinrichtung ist im Wesentlichen aus einem Schalthebel 1 mit einer Dreh-Schub-Schaltergruppe 2 zusammengesetzt, wobei ein Fußstück 3 des Schalthebels 1 kreuzgelenkig beaufschlagbar in einem in ein Lenkstockmodul für ein Kraftfahrzeug einzubauenden Schalterbauteil 4 gelagert ist. An dem dem Fußstück 3 gegenüberliegenden freien Ende des Schalthebels 1 ist ein Drehschalter 5 angeordnet, dessen Betätigungselement 6 in Richtung des Pfeils 7 in mehrere verrastete Schaltstellungen drehbar ist, um unterschiedliche Wischer-Funktionen eines Frontscheibenwischers des Kraftfahrzeuges zu aktivieren. Bei einer Schubbeaufschlagung des Betätigungselementes 6 in Richtung des Pfeils 8 wird eine Wischer-/Wascher-Funktion des Frontscheibenwischers getastet geschaltet. An das Betätigungselement 6 schließt sich ein Gehäuseteil 9 an, in das ein Ansatz 35 des Betätigungselementes 6 eintaucht.

In der alternativen Ausgestaltung der Schalteinrichtung ist an dem freien Ende des Schalthebels 1 ebenfalls der Drehschalter 5 vorgesehen, dem die bereits erläuterten Funktionen zugeordnet sind. Das Betätigungselement 6 liegt an einem Zierring 10 an, der sich auf einem Distanzring 11 abstützt, der zur drehbaren Lagerung einer Stirnseite eines Betätigungsringes 12 eines zweiten Drehschalters 13 dient, dessen gegenüberliegende Stirnseite an dem Gehäuseteil 9 gelagert ist. Die Beaufschlagung des Betätigungsringes 12 in die eine oder andere Richtung des Doppelpfeils 14 hat eine getastete Wascher-Funktion eines Heckscheibenwischers oder gerastet schaltbare Wischer-Funktionen des Heckscheibenwischers zur Folge.

Auf dem das Gehäuseteil 9 tragenden Fußstück 3 des Schalthebels 2 ist ein Schalterträger 15 angeordnet, der zum einen einen Kontaktfedern 16 umfassenden Kontakt 17 eines Schubschalters 18 und zum anderen eine radial hervorstehende federbelastete Rasthülse 36 trägt. Der als Festkontakt dienende Kontakt 17 des Schubschalters 18 wirkt mit Gegenkontakten 37 zusammen, die in einer Bohrung 19 eines ringförmigen Kontaktträgers 20 vorgesehen sind, der auf einem dem Schalterträger 15 zugeordneten verschiebbaren Schaltstück 21 befestigt ist. Der Kontaktträger 20 weist im Weiteren auf seinen gegenüberliegenden Stirnseiten 22 als Kontaktfelder 23 gestaltete Gegenkontakte 24 für die beiden Drehschalter 5, 13 auf, wobei sämtliche Gegenkontakte 24, 37 mit einer flexiblen Leiterplatte 25 gekoppelt sind, die sich durch das Innere des hohlen Fußstückes 3 sowie den auf dem Fußstück 3 angeordneten Abschnitt des Schalterträgers 15 erstreckt, der eine Öffnung 26 zum Durchtritt der Leiterplatte 25 aufweist, die zu einer Ausnehmung 27 zum Durchfädeln der Leiterplatte 25 in dem auf dem Schalterträger 15 gehaltenen Schaltstück 21 korrespondiert und in ihren weiteren Verlauf innerhalb des Schalthebels 1 zu dem Kontaktträger 20 geführt ist.

Das Betätigungselement 6 des ersten Drehschalters 5 umfasst einen mit stirnseitigen federbeaufschlagten Rasthülsen 28 versehenen Halter 29, der die mit den entsprechenden Gegenkontakten 24 des Kontaktträgers 20 beaufschlagenden zu einem federnden Kontaktring zusammengefassten Kontakte 30 aufweist, wobei die Rasthülsen 28 für die unterschiedlichen gerasteten Schaltstellungen des Drehschalters 5 mit einer dem Schaltstück 21 zugeordneten Rastkurve 31 zusammenwirken.

Der zweite Drehschalter 13 umfasst ebenfalls zu einem federnden Kontaktring zusammengefasste Kontakte 32 zur Beaufschlagung der zugeordneten Gegenkontakte 24 des Kontaktträgers 20 sowie eine stirnseitige Rastkurve 33, die mit federbelasteten Rasthülsen 34 des Kontaktträgers 20 zusammenwirkt. Die Rastkurve 33 ist derart ausgebildet, dass bei einer Verdrehung des Betätigungsringes 12 in die eine Richtung eine getastete Schaltstellung und in die andere Richtung mehrere verrastete Schaltstellungen eingenommen werden.

Bei der Beaufschlagung des Betätigungselementes 6 in Richtung des Pfeils 8 zur Betätigung des Schubschalters 18, wird das Betätigungselement 6 entgegen der Kraft einer sich auf einer Stirnseite des Schalterträgers 15 abstützenden Druckfeder 39 verlagert und der Kontaktträger 20 sowie das Schaltstück 21 in Richtung des Fußstückes 3 verschoben, wobei die im Inneren des Kontaktträgers 20 vorgesehenen Gegenkontakte 37 mit den an dem Schalterträger 15 festgelegten Kontakten 17 in Wirkkontakt gelangen. Hierbei gleitet die in radialer Richtung von dem Schalterträger 15 abstehende Rasthülse 36 entlang einer Schaltkurve innerhalb des Schaltstückes 21, um beim Loslassen des Betätigungselementes 6 eine Rückstellbewegung zu verursachen. Mit der Verlagerung des Betätigungselementes 6 geht eine entsprechende Bewegung der Leiterplatte 25 einher, wozu diese in einer Schleife 38 innerhalb des Schalthebels 1 verlegt ist.

### Bezugszeichenliste

- 1.: Schalthebel
- 2.: Dreh-Schub-Schaltergruppe
- 3.: Fußstück
- 4.: Schalterbauteil
- 5.: Drehschalter
- 6.: Betätigungselement
- 7.: Pfeil
- 8.: Pfeil
- 9.: Gehäuseteil
- 10.: Zierring
- 11.: Distanzring
- 12.: Betätigungsring
- 13.: Drehschalter
- 14.: Doppelpfeil
- 15.: Schalterträger
- 16.: Kontaktfeder
- 17.: Kontakt
- 18.: Schubschalter
- 19.: Bohrung v. 20
- 20.: Kontaktträger
- 21.: Schaltstück
- 22.: Stirnseite v. 20
- 23.: Kontaktfeld
- 24.: Gegenkontakt
- 25.: Leiterplatte
- 26.: Öffnung v. 15
- 27.: Ausnehmung
- 28.: Rasthülse
- 29.: Halter
- 30.: Kontakt
- 31.: Rastkurve
- 32.: Kontakt
- 33.: Rastkurve
- 34.: Rasthülse
- 35.: Ansatz v. 6
- 36.: Rasthülse
- 37.: Gegenkontakt
- 38.: Schleife
- 39.: Druckfeder

## Patentansprüche

1. Elektrische Schalteinrichtung, insbesondere Lenkstockschalter für ein Kraftfahrzeug, mit einer an dem freien Ende eines Schalthebels (1) angeordneten Dreh-Schub-Schaltergruppe (2), die zumindest einen Drehschalter (5, 13) und einen gegenüber dem Schalthebel (1) verschiebbaren Schubschalter (18) umfasst, wobei der Drehschalter (5, 13) und der Schubschalter (18) jeweils Kontakte (17, 30, 32) aufweisen, denen mit einer flexiblen Leiterplatte (25) verbundene Gegenkontakte (24, 37) eines Kontaktträgers (20) zugeordnet sind, **dadurch gekennzeichnet, dass** der Kontaktträger (20) als Schiebeschaltglied ausgebildet ist und stirnseitig die mit beweglichen Kontakten (30, 32) des Drehschalters (5, 13) zusammenwirkenden Gegenkontakte (24) sowie umfangsseitig die von Festkontakten (17) des Schubschalters (18) beaufschlagten Gegenkontakte (37) aufweist.

2. Schalteinrichtung nach Anspruch 1, **dadurch gekennzeichnet, dass** die in dem Kontaktträger (20) aufgenommenen Gegenkontakte (24, 37) als Kontaktfelder (23) und die Kontakte (17, 30, 32) als Kontaktfedern (16) ausgeführt sind.

3. Schalteinrichtung nach Anspruch 1 oder 2, **dadurch gekennzeichnet, dass** der Kontaktträger (20) ringförmig gestaltet und auf einem verschiebbaren Schaltstück (21) gelagert ist, das einem die Festkontakte (17) des Schubschalters (18) aufweisenden Schalterträger (15) zugeordnet ist.

4. Schalteinrichtung nach Anspruch 3, **dadurch gekennzeichnet, dass** der Schalterträger (15) auf einem kreuzweise beaufschlagbaren Fußstück (3) gehalten ist.

5. Schalteinrichtung nach einem der Ansprüche 1 bis 4, **dadurch gekennzeichnet, dass** sich die Leiterplatte (25) durch das Innere des hohlen Fußstückes (3) sowie einen auf dem Fußstück (3) angeordneten Abschnitt des Schalterträgers (15) erstreckt, der eine Öffnung (26) zum Durchtritt der Leiterplatte (25) aufweist, die zu einer Ausnehmung (27) zum Durchfädeln der Leiterplatte (25) in dem auf dem Schalterträger (15) gehaltenen Schaltstück (21) korrespondiert und in ihren weiteren Verlauf innerhalb von Gehäuseteilen zu dem Kontaktträger (20) geführt ist.

6. Schalteinrichtung nach einem der Ansprüche 1 bis 4, **dadurch gekennzeichnet, dass** zwei durch einen Distanzring (11) zueinander beabstandete Drehschalter (5, 13) vorgesehen sind, deren Kontakte (30, 32) auf gegenüberliegenden Stirnseiten des Kontaktträgers (20) angeordnete Gegenkontakte (24) beaufschlagen und die auf dem Schaltstück (21) gelagert sind.

7. Schalteinrichtung nach Anspruch 5, **dadurch gekennzeichnet, dass** das Betätigungselement (6) des ersten Drehschalters (5) dem freien Ende der Schalteinrichtung zugeordnet ist und einen mit stirnseitigen Rasthülsen (28) versehenen Halter (29) für die Kontakte (30) aufweist, wobei die federbelasteten Rasthülsen (28) mit einer dem Schaltstück (21) zugeordneten Rastkurve (31) zusammenwirken.

8. Schalteinrichtung nach Anspruch 5, **dadurch gekennzeichnet, dass** der zweite Drehschalter (13) einen Betätigungsring (12) mit den Kontakten (32) sowie einer stirnseitigen Rastkurve (33) umfasst, wobei die Rastkurve (33) mit federbelasteten Rasthülsen (34) des Kontaktträgers (20) zusammenwirkt.

9. Schalteinrichtung nach einem der Ansprüche 1 bis 7, **dadurch gekennzeichnet, dass** der Schalterträger (15) eine in radialer Richtung wirkende federbelastete Rasthülse (36) zur Beaufschlagung einer dem Schaltstück (21) zugeordneten Schaltkurve umfasst.

10. Verwendung der elektrischen Schalteinrichtung nach einem der Ansprüche 1 bis 8 als Wischer-/Wascherschalter für ein Kraftfahrzeug.

## Claims

1. Electrical switching device, in particular steering column switch for a motor vehicle, having.a turn/slide switch assembly (2) which is arranged at the free end of a switch lever (1) and includes at least one rotary switch (5, 13) and a push switch (18) slidable relative to the switch lever (1), the rotary switch (5, 13) and the push switch (18) each comprising contacts (17, 30, 32) which are assigned counter-contacts (24, 37) of a contact carrier (20) which are connected to a flexible printed circuit board (25), **characterised in that** the contact carrier (20) is designed as a sliding switch member and at the end faces comprises the counter-contacts (24) co-operating with movable contacts (30, 32) of the rotary switch (5, 13) as well as the counter-contacts (37) acted upon by fixed contacts (17) of the push switch (18).

2. Switching device according to claim 1, **characterised in that** the counter-contacts (24, 37) held in the contact carrier (20) are designed as contact areas (23), and the contacts (17, 30, 32) are designed as contact springs (16).

3. Switching device according to claim 1 or 2, **characterised in that** the contact carrier (20) is ring-shaped and mounted on a displaceable switch piece (21) which is assigned to a switch carrier (15) comprising the fixed contacts (17) of the push switch (18).

4. Switching device according to claim 3, **characterised in that** the switch carrier (15) is held on a base (3) which can be acted upon crosswise.

5. Switching device according to any of claims 1 to 4, **characterised in that** the printed circuit board (25) extends through the interior of the hollow base (3) as well as a section of the switch carrier (15) which is arranged on the base (3) and which has an opening (26) for passage of the printed circuit board (25), which opening (26) corresponds to a recess (27) for feeding the printed circuit board (25) through in the switch piece (21) held on the switch carrier (15) and, in its continuation inside housing parts, leads to the contact carrier (20).

6. Switching device according to any of claims 1 to 4, **characterised in that** two rotary switches (5, 13) spaced apart from each other by a distance ring (11) are provided, of which the contacts (30, 32) act on counter-contacts (24) arranged on opposite end faces of the contact carrier (20) and which are mounted on the switch piece (21).

7. Switching device according to claim 5, **characterised in that** the actuating element (6) of the first rotary switch (5) is assigned to the free end of the switching device and comprises a holder (29) provided with latch sleeves (28) on the end faces for the contacts (30), the spring-loaded latch sleeves (28) co-operating with a latch curve (31) assigned to the switch piece (21).

8. Switching device according to claim 5, **characterised in that** the second rotary switch (13) includes an actuating ring (12) with the contacts (32) and a latch curve (33) on the end face, the latch curve (33) co-operating with spring-loaded latch sleeves (34) of the contact carrier (20).

9. Switching device according to any of claims 1 to 7, **characterised in that** the switch carrier (15) includes a spring-loaded latch sleeve (36) acting in a radial direction, for acting on a switch curve associated with the switch piece (21).

10. Use of the electrical switching device according to any of claims 1 to 8 as a wiper/washer switch for a motor vehicle.

## Revendications

1. Dispositif de commutation électrique, en particulier commutateur fixé à la colonne de direction pour un véhicule automobile, doté d'un groupe de commutateurs rotatifs et à coulisse (2) disposé au niveau de l'extrémité libre d'un levier de commutation (1), lequel groupe comprend au moins un commutateur rotatif (5, 13) et un commutateur à coulisse (18) pouvant se déplacer par rapport au levier de commutation (1), le commutateur rotatif (5, 13) et le commutateur à coulisse (18) présentant chacun des contacts (17, 30, 32), auxquels sont associés des contre-contacts (24, 37) d'un Porte-contacts (20) reliés à une plaquette de circuit imprimé (25) flexible, **caractérisé en ce que** le porte-contacts (20) est formé comme un élément de commutation à coulisse et présente côté face avant les contre-contacts (24) coagissant avec des contacts (30, 32) mobiles du commutateur rotatif (5, 13) ainsi que côté périphérie les contre-contacts (37) alimentés par des contacts fixes (17) du commutateur à coulisse (18).

2. Dispositif de commutation selon la revendication 1, **caractérisé en ce que** les contre-contacts (24, 37) logés dans le porte-contacts (20) sont actionnés comme des panneaux de contacts (23) et les contacts (17, 30, 32) comme des ressorts de contact (16).

3. Dispositif de commutation selon la revendication 1 ou 2, **caractérisé en ce que** le porte-contacts (20) est conçu en forme d'anneau et est logé sur une pièce de contact mobile (21) qui est associée à un support de commutateurs (15) présentant les contacts fixes (17) du commutateur à coulisse (18).

4. Dispositif de commutation selon la revendication 3, **caractérisé en ce que** le support de commutateurs (15) est maintenu sur une base (3) pouvant être sollicitée en forme de croix.

5. Dispositif de commutation selon l'une quelconque des revendications 1 à 4, **caractérisé en ce que** la plaquette de circuit imprimé (25) s'étend à l'intérieur de la base creuse (3) ainsi qu'au travers d'une section du support de commutateurs (15) disposée sur la base (3), laquelle section présente une ouverture (26) pour le passage de la plaquette de circuit imprimé (25), laquelle ouverture correspond à un évidement (27) pour l'enfilage de la plaquette de circuit imprimé (25) dans la pièce de contact (21) maintenue sur le support de commutateurs (15) et est guidée dans son autre parcours au sein de parties de boîtier vers le porte-contacts (20).

6. Dispositif de commutation selon l'une quelconque des revendications 1 à 4, **caractérisé en ce que** deux commutateurs rotatifs (5, 13) espacés l'un de l'autre par une bague d'écartement (11) sont prévus, dont les contacts (30, 32) alimentent des contre-contacts (24) disposés sur des faces avant opposées du porte-contacts (20) et qui sont logés sur la pièce de contact (21).

7. Dispositif de commutation selon la revendication 5, **caractérisé en ce que** l'élément d'actionnement (6) du premier commutateur rotatif (5) est associé à l'extrémité libre du dispositif de commutation et présente un support (29) pour les contacts (30) pourvu de douilles d'arrêt (28) côté face avant, les douilles d'arrêt (28) soumises à l'action d'un ressort coagissant avec une came d'arrêt (31) associée à la pièce de contact (21).

8. Dispositif de commutation selon la revendication 5, **caractérisé en ce que** le second commutateur rotatif (13) comprend une bague d'actionnement (12) dotée des contacts (32) ainsi qu'une came d'arrêt (33) côté face avant, la came d'arrêt (33) coagissant avec des douilles d'arrêt (34) soumises à l'action d'un ressort du porte-contacts (20).

9. Dispositif de commutation selon l'une quelconque des revendications 1 à 7, **caractérisé en ce que** le support de commutateurs (15) comprend une douille d'arrêt (36) soumise à l'action d'un ressort, agissant dans le sens radial pour alimenter une came de commutation associée à la pièce de contact (21).

10. Utilisation du dispositif de commutation électrique selon l'une quelconque des revendications 1 à 8, comme commutateur d'essuie-glace/lave-glace pour un véhicule automobile.
